# EUROPEAN PATENT APPLICATION

(11) **EP 4 806 828 A1**
(43) Date of publication of application: **16.09.2026**
(21) Application number: 25382235.7
(22) Date of filing: 13.03.2025
(51) Int. Cl.: B66C 23/20, F03D 13/10

(54) **WIND TURBINE ASSEMBLY SYSTEM AND INSTALLATION METHOD**

(71) Applicant: Nordex Energy Spain, S.A.U., 31395 Barasoain (Navarra) (ES)
(72) Inventor: GARCÍA MAESTRE, Iván, Barasoain (ES); RUPPEN CAÑÁS, Francisco José, Pontevedra (ES); ÁLVARO GUTIÉRREZ, Pablo, Madrid (ES); BIEDMA GARCÍA, Manuel, Madrid (ES)
(74) Representative: Elzaburu S.L.P.

(57) **Abstract**

Wind turbine assembly system and method configured to be used in handling of components during assembly, disassembly and/or servicing of wind turbines, the wind turbine comprising a tower (2). The assembly system comprising a lifting structure comprising:
- a mast (1), and
- a boom (4) configured to be joined to the mast (1).

The assembly system being characterised in that it comprises a hoisting system comprising:
o first guiding means (9.1) configured to be located in the mast (1) for hoisting of the mast (1), and
o at least a hoisting cable (7) configured to be guided by the first guiding means (9.1) for hoisting the mast (1) from at least a horizontal position to a vertical position.

## Description

### FIELD OF THE INVENTION

The present invention relates to the technical field of wind turbine assembly systems and installation methods of wind turbine assembly systems.

### BACKGROUND OF THE INVENTION

Increase in wind turbine power, for instance, from 6MW up to 12MW, requires a significant increase in wind tower dimensions and height which have raised, for instance, from 120 m to 200 m. The large overturning moments associated with the increase in height make it necessary to have a high-capacity lifting structure or crane.

Traditionally, the installation of wind towers is carried out by means of commercial cranes whose hourly cost and dimensions are very significant. Mobile crawler cranes have been the standard solution for the installation of the latest generation of turbines, with a tower height in a range up to 180m.

This has led wind turbine manufacturers to consider the possibility to develop a dedicated assembly system to allow a more flexible process at higher wind speeds, optimizing time, cost and reducing downtime during erection of new towers as well as during maintenance of existing ones.

Assembly systems using climbing cranes are also known in the state of the art. These systems install the tower sections sequentially as they climb on the previous section already in place.

### SUMMARY OF THE INVENTION

The invention relates to a wind turbine assembly system to be used in handling of components during assembly, disassembly and/or servicing of wind turbines. Thus, the assembly system allows the process of putting together the different parts or components of a wind turbine, the process of separating them and the process of maintaining and repairing or substituting damaged parts, if needed. Examples of components are concrete sections, metallic sections, if any, elements of the wind turbine, etc.

The wind turbine assembly system may be configured to be used both for components installation and for maintenance purposes once all the components are installed.

The wind turbine comprises a tower. The wind turbine tower may be located on and anchored to a foundation. The wind turbine assembly system may comprise a lifting structure such as a crane. The wind turbine assembly system may comprise a self-lifted crane.

The assembly system comprises a lifting structure comprising:
- a mast, and
- a boom configured to be joined to the mast.

The mast is the base support structure and spans to the highest height in the working position. In an embodiment, the boom is joined to the mast and comprise gripping means for hoisting the cargo. The boom is hinged in rotation relative to the mast around the longitudinal axis of the mast. Its primary purpose is to lift, move, and position cargo. It is responsible for determining the reach of the lifting structure. The boom may be further configured to rotate around an axis perpendicular to its longitudinal axis to modify the angle between the mast and the boom.

In this application the terms vertical and horizontal mean substantially vertical and substantially horizontal. The term aligned means substantially aligned. The term parallel means substantially parallel.

In an embodiment, in its vertical position, the mast comprises a longitudinal lower portion and a longitudinal upper portion. Said portions are aligned. The longitudinal lower portion and the longitudinal upper portion may form an angle inferior to 180° in a vertical position. Thus, they are substantially aligned.

In an embodiment, in a vertical position of the mast, the longitudinal lower portion is configured to form an angle equal to or greater than 1° with the vertical direction and the longitudinal upper portion is configured to be parallel to the vertical direction. They are considered to be substantially aligned.

There is a longitudinal portion, the longitudinal lower portion which corresponds with a lower longitudinal portion of the mast, that overlaps with the tower when the lifting structure is in its working position and takes the angle of the tower generatrix which is approximately 1°. From there, the longitudinal upper portion rises vertically. This allows to use the lifting structure without colliding against the upper sections of the tower during the hoisting of the lifting structure.

The mast and/or the boom may comprise different sections. The sections may comprise different modules. Modules and sections may comprise different structures like lattice or tubular structures.

The different sections or modules may be connected to each other via fixed or rotatable connections. Rotatable connections allow the rotation of the modules or sections about axes parallel or perpendicular to the main direction of the sections or modules. Rotatable connections may be hinged members, ball and socket joints, or the like. Rotatable connections may include hydraulic, mechanical or electric rotating systems.

A rotatable connection may connect a first section and a second section of the mast.

A rotatable connection may connect a second section of the mast with the boom.

A first section may extend to about 40% to 90%, 50% to 80%, 60% to 70% of the total length of the mast in the vertical position.

A first section may constitute about 30% to 70%, about 40% to 60% of the total weight of the lifting structure.

A boom of the crane may extend to about 10% to 50%, 15% to 30%, about 20% to 30% of the total length of the mast in the vertical position.

The boom may constitute about 5% to 25%, 10% to 20%, 10% to 15% of the total weight of the lifting structure.

In a working or operation configuration, the mast extends along a mast direction which is substantially vertical, and the boom extends along a boom direction which may be changed between substantially horizontal to substantially vertical.

The mast is configured to be hoisted from at least a horizontal position to a vertical position.

The horizontal position may be a transport position.

The vertical position may be a working position.

The mast may be also configured to be hoisted between two different vertical positions with respect to the tower.

Transport of the mast, boom, sections or modules may be accomplished in a truck.

The mast, boom, sections or modules may reach the proximity of the tower in an essentially horizontal position.

The sections or modules of the mast and/or boom may be connected to each other in the proximity of the tower.

During its installation, the mast evolves from a first essentially horizontal position to a second essentially vertical position parallel to the longitudinal axis of the tower. The mast is hoisted between at least both positions.

In the first essentially horizontal position, a second section of the mast may be lying on a first section of the mast.

In the first essentially horizontal position, a boom may be lying on a first section of the mast.

The assembly system comprises a hoisting system comprising:
o first guiding means configured to be located in the mast for hoisting of the mast, and
o at least a hoisting cable configured to be guided by the guiding means for hoisting the mast from at least the horizontal position to the vertical position.

The assembly system may comprise a flipping system comprising:
o a flipping frame, and
o pivot means for connecting the mast to the flipping frame so that the mast is configured to pivot with respect to the flipping frame between the horizontal position and the vertical position. Pivot means may be a lug and pin, for instance.

In an embodiment, the wind turbine assembly system comprises a mast, a boom and a flipping frame that will allow the mast and the boom to be positioned vertically before starting the elevation of the mast and the boom to an upper vertical position for components installation. The hoisting system is configured to at least hoist the mast from the horizontal position to the vertical position. The mast may be hoisted, first of all, from the horizontal position to a vertical position and afterwards be hoisted to perform a vertical movement until an upper vertical working position.

The wind turbine may be a hybrid wind turbine comprising a first concrete section and a transition ring or adapter towards a metallic upper section.

Prior to the installation of the assembly system, the wind turbine may be fully installed up to the adapter and the tendons shall be pretensioned to its design working tension.

The flipping frame allows the mast to turn between the essentially horizontal position and the essentially vertical position. Thus, the mast evolves from an essentially horizontal position towards an essentially vertical position. The flipping system also comprises pivot means for anchoring or connecting the mast to the flipping frame. Therefore, the mast pivots with respect to the flipping frame.

The mast of the assembly system may be positioned on the flipping frame, pinned to the flipping frame to be able to be turned from horizontal to vertical positions by hoisting.

The flipping system may comprise ballast elements.

The flipping frame may be anchored to the foundation of the tower and the mast will pivot on the foundation via the flipping frame. In this case, the foundation will receive and withstand the loads generated in the operation.

Means for anchoring the flipping frame to the foundation of the wind turbine, can be, for instance, bolts.

In this embodiment, the flipping frame transfers the loads to the foundation.

The flipping frame may be configured to transfer both horizontal and vertical loads to the foundation.

The flipping frame may be thus a structure that allows the mast to pivot and receives the vertical and horizontal loads of the mast that are transferred to the tower foundation.

The foundation may comprise a pedestal and a lower foundation part. The lower part may comprise a slope.

The flipping system may further comprise a foundation block configured to be located annexed to the foundation. Thus, the foundation block is added in contact with the tower foundation as part of the foundation.

A foundation block may be located on the lower foundation part, next to the pedestal. The foundation block may be a concrete block.

The foundation block could be located stepped with the foundation so that a horizontal surface of the flipping frame rests on a horizontal surface of the foundation block and a vertical surface of the flipping frame may rest on a vertical surface of the foundation.

Thus, the foundation may comprise a horizontal foundation abutting surface and a vertical foundation abutting surface for connection of the flipping frame. The horizontal foundation abutting surface may be part of a concrete block located on the slope of the foundation, part of a pedestal of the foundation or part of both.

The vertical foundation abutting surface may be part of the pedestal.

The hoisting system of the assembly system may further comprise:
o a winch,
o second guiding means configured to be located in the tower,
o the hoisting cable being further configured to be deployed from the winch and configured to be further guided by the second guiding means for hoisting the mast from at least the horizontal position to the vertical position.

A winch is a machine configured to lift heavy objects by turning a hoisting cable around a drum.

The guiding means may comprise a pulley or sheave.

First guiding means may be movable along the mast between an upper hoisting position and a lower hoisting position.

The hoisting cable is configured to exert a traction force on the mast.

The hoisting cable goes to the mast for hoisting the mast.

The hoisting cable may go from the winch to the tower and to the mast for the hoisting of the mast. The cable may be redirected multiple times between the tower and the mast multiplying pulling power.

The cable may be made of fibre to minimize the weight of the pulleys that are hoisted to the tower.

The winch, the first guiding means, the second guiding means and the hoisting cable may be preassembled so that they are transported to the proximity of the tower already assembled.

Thus, the winch system may be configured as a kit of parts.

The kit of parts may be configured to adopt a transport or storage configuration and a use configuration.

The kit of parts may change from a transport or storage configuration to a use configuration by unwinding the hoisting cable.

The kit of parts may change from use configuration to a transport or storage configuration by winding up the hoisting cable.

The kit of parts may be configured to have the winch, first and second guiding means connected among them by the hoisting cables in both the transport or storage configuration and the use configuration.

The change between the transport or storage configuration to the use configuration may be performed without disconnecting the hoisting cable from the winch, the first and the second guiding means.

The assembly system may comprise a holding system for guiding the mast along the tower from a lower vertical position to an upper vertical position. The holding system helps the mast to be lifted along the tower. The holding system may comprise at least an embracing element joined to the mast and configured to at least partially surround a transversal section of the tower in the vertical position of the mast.

The embracing element may be joined to the mast by means of quick couplers controlled from the mast.

The holding system allows to support the wind load and to compensate for its effects during hoisting/lowering the assembly system. The holding system stabilizes the elevation process and maintains the lifting structure in vertical position.

The holding system may comprise adjustable means for adapting to the diameter of the tower. The adjustable means may be telescopic means.

The holding system may comprise contacting means for contacting the surface of the tower. Such contacting means may comprise rolling elements.

The holding system may comprise positioning means for correcting the position of the lifting structure along the circumference of the tower. Such positioning means may comprise rolling elements.

An installation method for a wind turbine assembly system may comprise the following steps:
- locating the first guiding means of the hoisting system in the mast for its hoisting,
- pulling the hoisting cable of the hoisting system and hoisting the mast between at least the horizontal position and the vertical position.

In an embodiment, the method comprises the steps of:
- providing a winch,
- hoisting second guiding means to the tower,
- pulling the hoisting cable of the hoisting system deployed from the winch and further guided by the second guiding means and hoisting the mast between at least the horizontal position and the vertical position.

The method may comprise the step of providing a flipping frame of a flipping system, connecting the mast to the flipping frame, through pivot means allowing the mast to pivot with respect to the flipping frame between the horizontal position and the vertical position.

In an embodiment, the method comprises connecting the flipping frame to a foundation of the wind turbine.

An installation method for a wind turbine assembly system may comprise connecting the mast to a winch system through guiding means located in the mast. The winch system comprises at least a hoisting cable joined to the guiding means in the mast and to the tower and to a winch for hoisting the mast from the horizontal position to the vertical position by pulling the hoisting cable.

An installation method for a wind turbine assembly system may comprise unfolding the mast from a horizontal position to a vertical position wherein first and second sections are substantially vertically aligned along the same vertical axis. The second section is connected to a first section and located on the first section in a layered arrangement in the horizontal position.

Unfolding the mast may comprise a first unfolding step wherein the boom is aligned with the second section and a second unfolding step wherein the boom is rotated around a horizontal axis parallel to the ground, in a direction away from the tower.

Unfolding the mast may comprise turning the first section clockwise and turning the second section counter-clockwise.

Unfolding the mast may comprise pulling the second section by the hoisting cable in an angle of 0° to 90°, 10° to 70°, 20° to 60°, 30° to 50°, around 25° with the axis of the tower.

Unfolding the mast may comprise pulling the second section by the hoisting cable in a first phase in an angle of 0° to 90°, 10° to 70°, 20° to 60°, 25° to 45°, around 30° with the axis of the tower and pulling the second section by the hoisting cable in a second phase in an angle of 0° to 90°, 10° to 70°, 15° to 45°, around 20° with the axis of the tower.

The boom may be rotated during the unfolding operation. The boom may rotate from 0° to 90° with respect to the second section of the mast.

In an embodiment the hoisting cable is joined to the mast in the proximity of the upper end of the mast.

An installation method for a wind turbine assembly system may comprise actuating over a holding system for guiding the mast along the tower, the holding system comprising at least an embracing element in contact with the mast so that it at least partially surrounds a transversal section of the tower in the vertical position of the crane.

### DESCRIPTION OF THE FIGURES

To complete the description and to provide a better understanding of the invention, drawings are provided. Said drawings form an integral part of the description and illustrate embodiments of the invention. The drawings comprise the following figures.
Figure 1 shows a side view of an embodiment of the assembly system with the mast and boom located in the horizontal position in which the mast is coupled to the flipping frame in a rotary manner.
Figure 2 shows an embodiment of the sequence of the hoisting process of the mast and the boom being hoisted from the horizontal position to the vertical position.
Figure 3 shows a side view of another embodiment of the assembly system with the mast located in the horizontal position and an embodiment of its hoisting process.
Figure 4 shows an embodiment of the sequence of the hoisting process of the mast and the boom being hoisted from the lower vertical position to the upper vertical position.
Figure 5 shows a side view of an embodiment of the mast located in the vertical working position annexed to a hybrid tower comprising a plurality of concrete sections and two metallic upper sections.
Figure 6 shows a front view, a perspective view and a plan view of an embodiment of the flipping frame of the flipping system, the foundation block of the flipping system and the means for anchoring the flipping frame to the tower foundation and the foundation block.
Figures 7A and 7B show a perspective view of an embracing element and of the internal contacting devices attached to an outer frame.
Figure 8 shows an embodiment of the winch located on the ground in the proximity of the base of the tower.
Figure 9 shows an embodiment of the winch system configured as a kit of parts.
Figure 10 shows a layout of the components of the wind turbine tower assembled with the wind turbine assembly system.

### DETAILED DESCRIPTION OF THE INVENTION

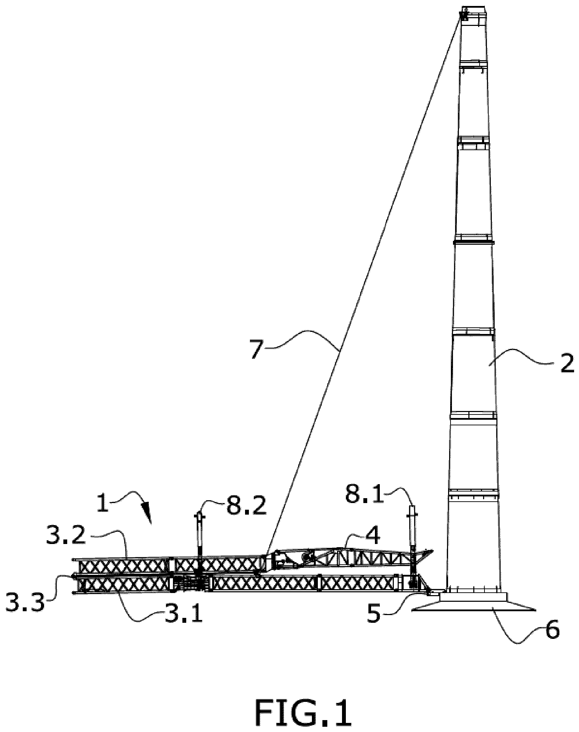

Figure 1 shows a side view of an embodiment of the lifting structure located in the horizontal position. It is also disclosed a tower (2) and a foundation (6).

More particularly, the lifting structure comprises:
- a mast (1), and
- a boom (4) configured to be joined to the mast (1).

In the shown embodiment, the mast (1) is mainly a lattice mast and it may comprise longitudinal portions of different structure.

The boom (4) is pivotally connected with the mast (1).

In the shown embodiment, the mast (1) comprises at least a first section (3.1) and a second section (3.2). They are configured to be aligned along the same longitudinal axis in the vertical position.

In an embodiment, when the lifting structure is in a horizontal position, the boom (4) is extended and aligned with the mast (1), so there is a lower section comprising mast modules and an upper section comprising mast and boom parts.

Aligned has to be understood as essentially aligned, i.e., both elements are arranged along the same line or along two close parallel lines. The separation between the longitudinal axis of the mast (1) and of the boom (4) on two close parallel lines may help the boom (4) increase the clearance to the tower (2) when in a working position.

In the folded state, the first section (3.1) is configured to be located between the second section (3.2) and the ground.

In the embodiment shown in Figure 1, the boom (4) is located in a folded position aligned with the upper section (3.2) of the mast (1) and lies on the lower section (3.1).

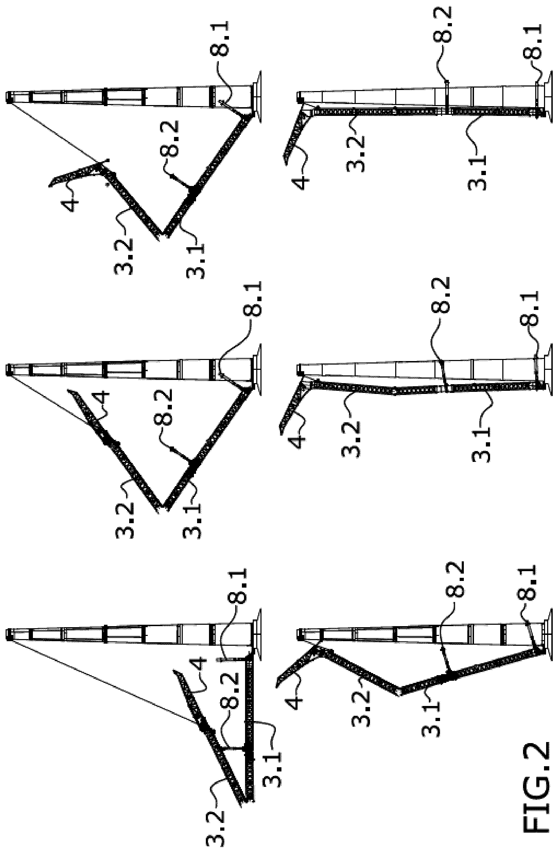

In the embodiment shown in figure 1, the two sections (3.1, 3.2) are pivotably connected so that they are movable between a horizontal folded state, represented in figure 1 and a vertical extended state, whose transition process is represented in figure 2. In an embodiment, a hinge member (3.3) is mechanically linked to the two sections (3.1, 3.2) of the mast (1).

In an embodiment, the second section (3.2) moves from the horizontal position to the vertical position counterclockwise while the first section (3.1) moves from the horizontal position to the vertical position clockwise.

According to the above, the method may comprise the step of pulling from the second section (3.2) so that the second section (3.2) moves from the horizontal position to the vertical position in a direction of rotation while the first section (3.1) moves from the horizontal position to the vertical in the opposite direction of rotation.

The first guiding means (9.1) are located in the second section (3.2) of the mast (1) for its hoisting so that the second section (3.2) moves from the horizontal position to the vertical position in a direction of rotation while the first section (3.1) moves from the horizontal position to the vertical in the opposite direction of rotation.

In an embodiment, the mast (1) comprises an overall length greater than the total length of the steel section in the hybrid tower to be assembled.

The mast (1) may comprise a rotating system actuating between the two sections (3.1, 3.2) for controlling the deployment between both sections (3.1, 3.2) in order to allow a corrected transmission of the loads once the mast (1) approaches the vertical position. Said rotating system, may be hydraulic, mechanical or electrical.

The rotating system is configured to stop the relative movement between the two sections (3.1, 3.2) when the two sections (3.1, 3.2) are located in an aligned position along their longitudinal axis so that the relative position between the two sections (3.1, 3.2) is fixed. It prevents the mast (1) to move towards the tower (2) and hit it.

In the embodiment shown in figure 2, the boom (4) is configured to be located aligned along the same longitudinal axis with the second section (3.2) of the mast (3) in the horizontal position. Therefore, the boom (4) and the second section (3.2) rest on to the first section (3.1) in the horizontal folded position. Therefore, the hinge member (3.3) is located between the first and second sections (3.1, 3.2).

In an embodiment, the first section (3.1) is of a length approximately equal to the sum of the lengths of the second section (3.2) and the boom (4). It allows the centre of gravity of the mast (1) and the boom (4) in the elevation process to be located closer to the tower (2) so that the horizontal loads on the tower (2) are reduced. The greater the distance between the centre of gravity of the mast (1) and the tower (2), the more force the hoisting system will have to exert and the greater the horizontal load exerted on the tower (2).

The boom (4) may turn 360° around the vertical axis of the mast (1) to ease the components handling/installation process.

The boom (4) may move from 21° to 83° approximately around a horizontal axis for luffing working angle and up to 90° for assembly process and parking position.

In an embodiment, in the first part of the hoisting process, first unfolding step, the boom (4) is aligned with the second section (3.2) of the mast (3) allowing to keep the centre of gravity closer to the tower (2) which results in less horizontal load on the tower (2), as previously stated.

In an embodiment, the hoisting system comprises a hoisting cable (7) and a first guiding means (9.1) located in the tower (2).

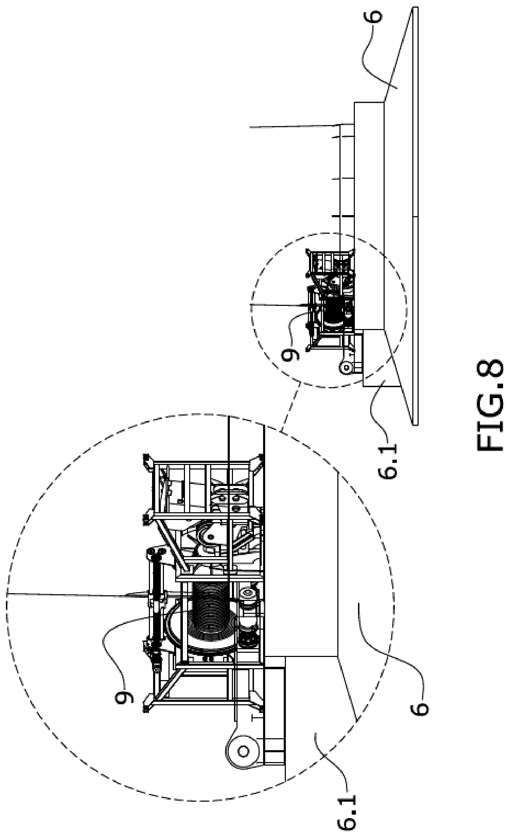

The winch (9) may allow elevation of the mast (1) to its vertical position, and it may be installed at ground elevation as can be seen in figure 8.

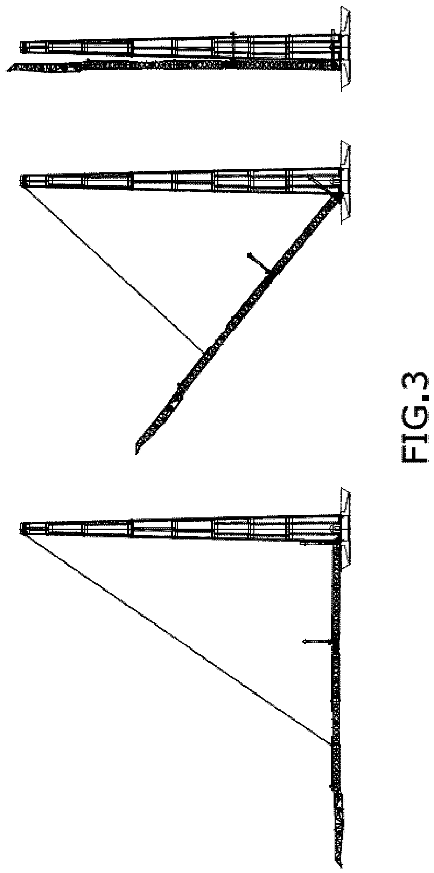

Figures 2 and 3 disclose two alternatives for hoisting of the mast (1) from a horizontal position to a vertical position.

In figure 2 the mast (1) moves from a folded horizontal state to an unfolded vertical state.

The assembly system (1) comprises a rotating system actuating between the second section (3.2) and the boom (4). The rotating system may be mechanical, hydraulic or electric. The assembly system may comprise motorized or electric gears.

In an embodiment, a luffing system is configured to pivot the boom (4) with respect to the second section (3.2) in opposite direction to the tower (2) when its longitudinal axis forms between 10° and 80° with the longitudinal axis of the tower (2) in the hoisting process. That is to say, in the hoisting process from the horizontal position to the vertical position, the boom (4) is firstly aligned with the mast (1) and at a certain angle it is moved in opposite direction to the tower (2).

It prevents the boom (4) from contacting the tower (2) during the hoisting process while in the first part of the hosting process the boom (4) which is aligned with the second section (3.2) of the mast (3) allows to keep the centre of gravity closer to the tower (2) which results in less horizontal load on the tower (2). In an embodiment, the luffing system is configured to pivot the boom (4) with respect to the second section (3.2) in opposite direction to the tower (2) when the longitudinal axis of the boom forms between 20° and 70°, 30° and 60°, 30° and 50°, 30° and 45° with the longitudinal axis of the tower (2) in the hoisting process.

In an embodiment, the luffing system is configured to pivot the boom (4) with respect to the second section (3.2) in opposite direction to the tower (2) to form an angle of between 10° and 90°, 30° to 90°, 50° to 90°, 60° to 90°, about 80° with the longitudinal axis of the second section in at least part of the hoisting process.

In the embodiment shown in figure 3, in the horizontal position the two sections (3.1, 3.2) are located aligned along the same longitudinal axis and the mast (1) is hoisted in an extended state.

In a horizontal position, the boom (4) may be located aligned with the mast (1), as shown in figure 3, or folded over the mast (1).

Figure 1 also discloses the mast (1) connected to the flipping frame (5). As can be seen in figures 2 and 3, the mast (1) pivots with respect to the flipping frame (5) between the horizontal position and the vertical position.

In an embodiment, the hoisting system is duplicated and located in a symmetrical arrangement with respect to the tower (2). Thus, the hoisting system may comprise two winches (9), two first guiding means (9.1) located in the mast (1), two second guiding means (9.2) located in the tower (2) and at least two hoisting cables (7).

In an embodiment, each winch (9) is located on one side of the flipping frame (5).

Figures 1, 2 and 3 disclose the second guiding means located in the tower (2).

In the embodiments shown, the second guiding means of the hoisting system are located in an adapter located on the concrete longitudinal section.

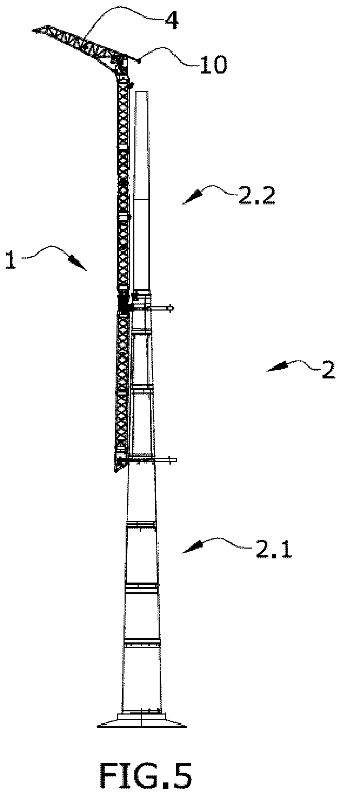

The tower (2) may be a hybrid tower comprising at least a concrete longitudinal section (2.1) and a metallic longitudinal section (2.2). It is represented, for instance, in figure 5 wherein the tower (2) comprises a plurality of concrete sections (2.1) and two upper metallic longitudinal sections (2.2).

In hybrid towers, the second guiding means of the hoisting system may be located in an adapter located between the concrete longitudinal section (2.1) and the metallic longitudinal section (2.2).

In an embodiment, the winch (9), the first guiding means (9.1), the second guiding means (9.2) and the hoisting cable (7) are factory preassembled so that they are transported to the proximity of the tower (2) already assembled. This avoids having to assemble meters of hoisting cable (7) every time the lifting structure is assembled in a tower (2).

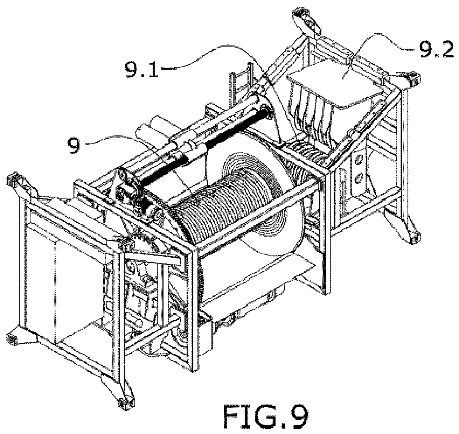

An embodiment is depicted in figure 9. The winch (9), the first guiding means (9.1), the second guiding means (9.2) and the hoisting cable (7), which is not represented, are held in a frame structure.

In an embodiment, the second guiding means are located underneath the adapter.

The first guiding means (9.1) are located, firstly, in the proximity of the upper end of the mast (1) for hoisting the mast (1) from the horizontal position to the vertical position.

Once the mast (1) is in the vertical position, the first guiding means (9.1) are lowered relative to the mast (1) to a second position such that the mast (1) can be hoisted by the hoisting system to an upper position with respect to the tower (2).

The first guiding means (9.1) may be movable along the mast (1) between an upper hoisting position and a lower hoisting position. Thus, the first guiding means (9.1) may slide from an upper hoisting position to a lower hoisting position. The upper hoisting position is, in the shown embodiment, the upper part of the mast (1).

The upper hoisting position may be located in the second section (3.2) of the mast (1).

The upper hoisting position may be located in proximity of the end of the second section (3.2) opposite to the first section (3.1).

The lower hoisting position may be located in the first section (3.1) of the mast (1).

The lower hoisting position may be located substantially near an embracing element (8.2).

The mast (1) comprises dedicated pins configured to be joined to the tower (2) in the upper vertical position of the mast (1).

Once the mast (1) has achieved its working position, the mast (1) is supported from the dedicated pins of the mast (1) that are joined to the adapter in an embodiment.

The lower hoisting position of the first guiding means (9.1) is located underneath the dedicated pins.

In another embodiment, additional first guiding means (9.1) may be located at the lower hoisting position, configured for being connected to the second guiding means located on the tower (2) and for performing the vertical hoisting of the lifting structure.

According to the above, in an embodiment the installation method may comprise the following steps:
- the first guiding means (9.1), the second guiding means (9.2), the winch (9) and the hoisting cable (7) are preassembled before being transported to the proximity of the tower,
- the first guiding means (9.1) are located in the mast (1),
- the second guiding means (9.2) are hoisted to the tower (2).

In an embodiment, the installation method comprises installing two winch systems, i.e., two winches (9), two first guiding means (9.1), two second guiding means and two hoisting cables (7). Both winch systems may be controlled with the same controller.

In an embodiment, the flipping system comprises means for anchoring the flipping frame (5) to the foundation (6).

The flipping frame (5) may comprise a horizontal surface (5.3) configured to rest on a horizontal surface of a foundation and a vertical surface (5.4) configured to rest on a vertical surface of a foundation so that the flipping frame (5) is able to withstand vertical and horizontal loads.

In an embodiment, the flipping system further comprises a foundation block (6.1) configured to be located annexed to the tower foundation (6) so that the horizontal surface (5.3) of the flipping frame (5) is configured to rest at least partially on a horizontal surface of the foundation block (6.1).

The foundation block (6.1) can be located stepped with respect to the tower foundation (6) so that the vertical surface (5.4) is configured to rest on the vertical surface of the tower foundation (6).

In the shown embodiment, the foundation block (6.1) is located over the slopped foundation part. The foundation block (6.1) receives the vertical loads. In an embodiment the flipping frame (5) comprises means for its anchoring to a foundation, specifically to the foundation block (6.1). This means can be bolts.

The foundation block (6.1) configured above withstands horizontal and vertical loads, in order to respond to the structure flipping, where the direction of the loads is changing.

The flipping frame (5) may be made of concrete, casting, etc.

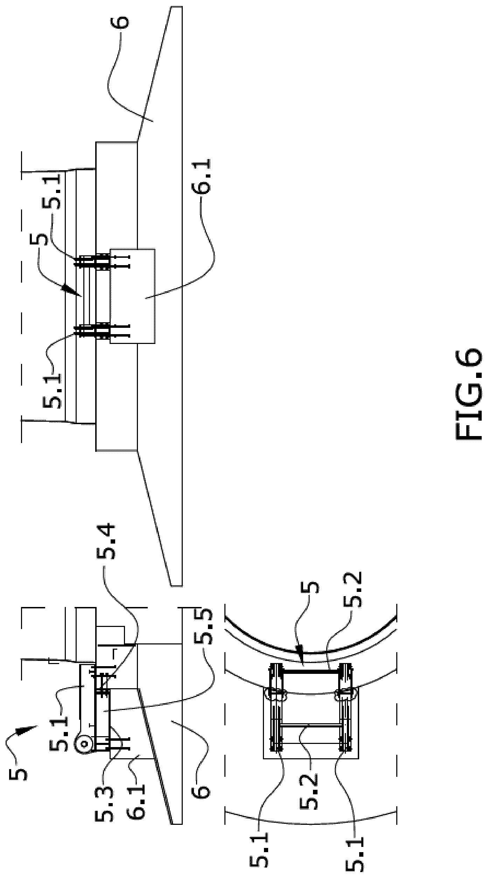

In the embodiment disclosed in figures 6a and 6b, the flipping frame (5) comprises two first beams (5.1) and two second beams (5.2). The two first beams (5.1) are configured to be located in a plane perpendicular to the longitudinal direction of the mast (1) in its vertical position. The two second beams (5.2) extend between the two first beams (5.1). The means for anchoring the flipping frame (5) are bolts that are joined to the two first beams (5.1).

The flipping frame (5) may comprise two additional third beams (5.5) located parallel and annexed to the first beams (5.1) comprising anchoring means to the tower foundation (6). The additional third beams (5.5) are configured to be located abutting both the foundation block (6.1) and the tower foundation (6) pedestal, so as to transfer loads vertically and horizontally.

Therefore, the tower (2) foundation (6) and the foundation block (6.1) are adapted to support the flipping frame (5). In the shown embodiment, the flipping frame (5) partially rests on the foundation block (6.1). In an embodiment, the foundation block (6.1) may have a dimension of 4.5 meters in length.

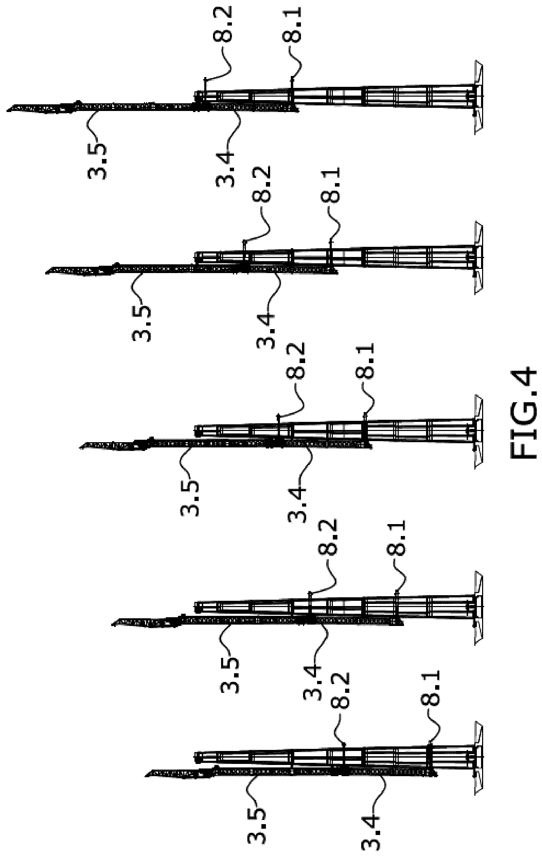

In the embodiment shown in the figures, a holding system for guiding the mast (1) along the tower (2) is disclosed. The holding system guides the mast (1) from the lower vertical position to the upper vertical position as it is represented in figure 4.

The holding system supports the wind load and compensates for its effects during hoisting/lowering of the mast (1).

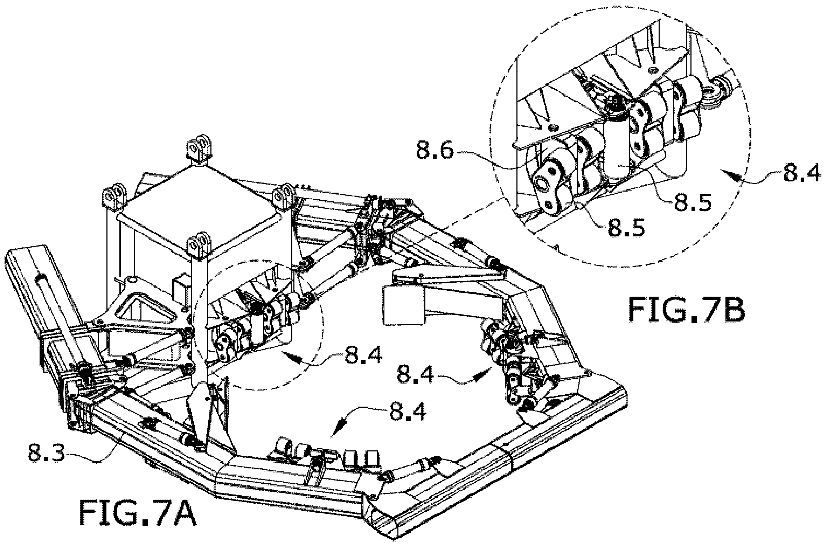

The holding system comprises at least an embracing element (8.1, 8.2), for instance, as disclosed in figure 7a. The embracing element (8.1, 8.2) is joined to the mast (1) and is configured to at least partially surround a transversal section of the tower (2) in the vertical position of the mast (1).

In the shown embodiment, the lifting structure comprises a first embracing element (8.1) and a second embracing element (8.2) as can be seen in figure 1 or figure 2, for instance. The first embracing element (8.1) is located in the vicinity of the end of the mast (1) configured to be connected to the flipping frame (5), thus in a lower vertical position. The second embracing element (8.2) is located in an upper vertical position with respect to the first embracing element (8.1).

The two embracing elements (8.1, 8.2) help to stabilize the elevation process from the lower vertical position to the upper vertical working position and to maintain the lifting structure in vertical position.

In these embodiments, the second embracing element (8.2) is located in the mast (1) section (3.1) that is configured to be connected to the flipping frame (5) although in an upper position with respect to the first embracing element (8.1).

The embracing elements (8.1, 8.2) may comprise an outer frame (8.3) configured to at least partially surround a transversal section of the tower (2) in a vertical position of the mast (1).

The outer frame (8.3) may comprise one or more telescopic segments configured so as to at least partially surround a transversal section of the tower (2) so that the outer frame (8.3) is adaptable to the transversal dimension of the tower (2) section.

It also comprises internal contacting devices (8.4) attached to the outer frame (8.3) and internally to it (8.3) in a transverse direction, i.e., in a direction perpendicular to the longitudinal direction of the tower (2). The internal contact devices (8.4) are configured to contact the tower (2) in the vertical position of the mast (1).

The embracing elements (8.1, 8.2) may be attached to the mast (1) by means of hydraulic quick pins operated from the hydraulic power unit of each module. To implement the embracing of the lifting structure to the tower (2) a minimum of three support points in each embracing element (8.1, 8.2) are advisable.

In the embodiment shown in the figures 7, the embracing elements (8.1, 8.2) comprise contacting devices (8.4). Two contacting devices (8.4) are located on the frame (8.3) in a symmetrical arrangement with respect to the mast (1). A third contacting device (8.4) is located on the mast (1).

The holding system may additionally comprise additional support points in the first embracing element (8.1), for the final vertical position.

The first embracing element (8.1), which is located in the lower position, during the hoisting of the lifting structure may not cover 100% of the tower (2) perimeter. When the lifting structure reaches its final vertical position at the top of the unfinished tower (2), the first embracing element (8.1) may close and surround the perimeter of the tower (2). Thus, it provides a more rigid and stable joint with greater structural capacity.

The contacting devices (8.4) may be wheeled contacting devices (8.4).

Figure 7b represents an embodiment of the internal contacting devices (8.4). They comprise at least a rolling element (8.5) configured to contact the tower (2) in the vertical position of the mast (1) and a support (8.6) of the rolling element (8.5) that extends inwardly from the outer frame (8.3). The rolling elements (8.5) are configured to rectify the possible angular deviation during the crane hoisting/lowering process.

The embracing elements (8.1, 8.2) may have additional internal contacting devices (8.4) during the working position of the mast (1), although said additional internal contacting devices (8.4) do not need rolling elements as the mast (1) is already located in its final working position.

Therefore, the embracing elements (8.1, 8.2) are able to adapt to the conicity of the tower (2) keeping a minimum distance of the outer frame (8.3) with the tower (2). The loads are supported by the supports (8.6) of the rolling elements (8.5).

According to the above, the embracing elements (8.1, 8.2) are closed at least partially around the tower (2) and the mast (1) is hoisted up to the upper working position.

In the shown embodiment, the mast (1) is hoisted until the second embracing element (8.2) reaches the adapter.

Once the mast (1) has achieved its working position, the mast (1) is supported from dedicated pins of the mast (1) that are joined to the adapter. The lower embracing element (8.1) fixes horizontally the mast (1) providing stabilization of the lifting structure against horizontal loads. The upper embracing element (8.2) may not support loads.

The dedicated pins may be located in telescopic arms configured to adopt an open position during the hoisting process and a closed position for joining the dedicated pins to the adapter and for the operation of the lifting structure.

The lifting structure may comprise stoppers (10), for instance see figure 5, powered softeners that are configured to act in the final approach of the mast (1) to the tower (2).

In an embodiment, the stoppers (10) may comprise an arm configured to protrude from the mast (1) or the boom (4).

The lifting structure comprises three hydraulic power packs, one for each embracing element (8.1, 8.2) and one for the boom (4). Being smaller, they work with less flow, are safer and easier to operate. This means that it is not necessary to make connections on site. It is a more robust system and splashes less, making it more environmentally friendly. Therefore, it allows the process to be automatic and the assembly operations are faster.

In an embodiment, the mast comprises a longitudinal lower portion (3.4) and a longitudinal upper portion (3.5). In a vertical position of the mast (1), the longitudinal lower portion (3.4) is configured to form an angle equal to or greater than 1° with a vertical direction and the longitudinal upper portion (3.5) is configured to be parallel to a vertical direction.

Thus, the longitudinal lower portion (3.4) and the longitudinal upper portion (3.5) form an angle lower than 180°.

In the embodiment shown in figure 4, the longitudinal sections of the mast (1) are not completely aligned. There is a longitudinal portion, the longitudinal lower portion (3.4) that overlaps with the tower (2) when the lifting structure is in its working position and takes the angle of the tower generatrix, approximately 1^{o}. From there, the longitudinal upper portion (3.5) rises vertically. The longitudinal lower portion (3.4) and the longitudinal upper portion (3.5) form an angle of approximately 179^{o}.

The longitudinal lower portion (3.4) may span from the end of the mast (1) which is configured to be the lower end of the mast (1) in the vertical configuration of the lifting structure until the second embracing element (8.2).

The longitudinal lower portion (3.4) may be comprised in the first section (3.1) of the mast (1). The upper end of the longitudinal lower portion (3.4) when the lifting structure is in a vertical position may be located at a point below the connection between the first section (3.1) and second section (3.2) of the mast (1).

The first and second embracing elements (8.1, 8.2) may be comprised in the longitudinal lower portion (3.4).

Having a mast (1) comprising a longitudinal lower portion (3.4) configured to be annexed to the tower (2) in the working position and a longitudinal upper portion (3.5) extending above the tower (2) provides several advantages:
- it allows the boom (4) to be positioned at a greater height so that from a final position of the lifting structure both, the upper longitudinal sections (2.2) of the tower (2), and the wind turbine elements, can be hoisted,
- it may also allow not to move the lifting structure up the tower (2) once the upper longitudinal sections (2.2) have been hoisted as the upper longitudinal sections (2.2) and the wind turbine elements can be hoisted from the same final position of the lifting structure,
- the longitudinal lower portion (3.4) overlapping the tower (2) allows for reduced punctual loads on the tower (2) by facilitating load distribution, thanks also to the embracing members (8.1, 8.2).

In an alternative embodiment, the lifting structure comprising a mast (1) is configured to climb in a vertical direction between a first operating position and at least a second operating position, i.e., it could be a self-climbing crane. In the first operating position the lifting structure is able to install part of the components of the wind turbine. In the second or further operating position, the lifting structure is able to install other components of the wind turbine.

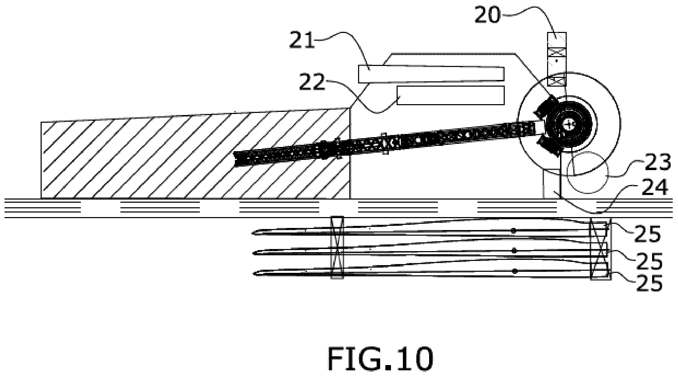

Figure 10 discloses an embodiment of the layout of the components to be hoisted.

It comprises an angular origin point being essentially coincident with the intersection of the axis of rotation of the boom (4) with respect to the mast (1), with regard to the base of the foundation (6) and an angular origin line defined as the horizontal projection with regard to the base of the foundation (6), of a line that joins the axis of rotation of the boom (4) and the axis of the tower (2). The horizontal projection of the position of the boom (4) of the lifting structure once the mast (1) is attached to the tower (2) forms an angle with respect to the angular origin line; and wherein the centre of gravity of each one of the wind turbine components to be assembled is disposed in the following angle range with regard to the angular origin line:
o Nacelle (20) between +85 and +95^{o};
o Top metallic section (21) between +40^{o} and +50^{o};
o Lower metallic section (22) between +25^{o} and +35^{o};
o Hub (23) between -95^{o} and -105^{o};
o Drive train (24) between -55^{o} and -65^{o};
o Blades (25) [between -50^{o} and -60°], [between -55° and -65^{o}], [between -60^{o} and -70^{o}].

## Claims

1. **Wind** turbine assembly system configured to be used in handling of components during assembly, disassembly and/or servicing of wind turbines, the wind turbine comprising a tower (2), the assembly system comprising a lifting structure comprising:
- a mast (1), and
- a boom (4) configured to be joined to the mast (1),
the assembly system is **characterised in that** it comprises a hoisting system comprising:
o first guiding means (9.1) configured to be located in the mast (1) for hoisting of the mast (1), and
o at least a hoisting cable (7) configured to be guided by the first guiding means (9.1) for hoisting the mast (1) from at least a horizontal position to a vertical position.

2. Wind turbine assembly system, according to claim 1, wherein the hoisting system further comprises:
o a winch (9),
o second guiding means (9.2) configured to be located in the tower (2), and
o the hoisting cable (7) being further configured to be deployed from the winch (9) and configured to be further guided by the second guiding means (9.2) for hoisting the mast (1) from at least the horizontal position to the vertical position.

3. Wind turbine assembly system, according to claim 2, wherein the winch (9), the first guiding means (9.1), the second guiding means (9.2) and the hoisting cable (7) are preassembled so that they are transported to the proximity of the tower (2) already assembled.

4. Wind turbine assembly system, according to any preceding claim, wherein the mast (1) comprises at least a first section (3.1) and a second section (3.2) being configured to be located aligned along the same longitudinal axis in the vertical position.

5. Wind turbine assembly system, according to claim 4, wherein the first section (3.1) and the second section (3.2) are pivotably connected so that they are movable between a horizontal folded state and a vertical extended state, in the folded state the first section (3.1) being configured to be located between the second section (3.2) and the ground.

6. Wind turbine assembly system, according to claim 5, wherein the first guiding means (9.1) are located in the second section (3.2) of the mast (1) for its hoisting so that the second section (3.2) moves from the horizontal position to the vertical position in a direction of rotation while the first section (3.1) moves from the horizontal position to the vertical in the opposite direction of rotation.

7. Wind turbine assembly system, according to any preceding claim, wherein the assembly system further comprises a flipping system comprising:
∘ a flipping frame (5), and
o pivot means for connecting the mast (1) to the flipping frame (5) so that the mast (1) is configured to pivot with respect to the flipping frame (5) between the horizontal position and the vertical position.

8. Wind turbine assembly system, according to claim 7, wherein the flipping system comprises means for anchoring the flipping frame (5) to a foundation (6) of the tower (2).

9. Wind turbine assembly system, according to claim 7 or 8, wherein the flipping frame (5) comprises a horizontal surface (5.3) configured to rest on a horizontal surface of a foundation (6) and a vertical surface (5.4) configured to rest on a vertical surface of a foundation (6) so that the flipping frame (5) is able to withstand vertical and horizontal loads.

10. Wind turbine assembly system, according to claim 9, wherein the flipping system further comprises a foundation block (6.1) configured to be located annexed to the foundation (6) of the tower (2) so that the horizontal surface (5.3) of the filliping frame (5) is configured to rest on a horizontal surface of the foundation block (6.1).

11. Wind turbine assembly system, according to any preceding claim, wherein the first guiding means (9.1) are movable along the mast (1) between an upper hoisting position and a lower hoisting position, so that the mast (1) is configured to be hoisted along the tower (2) from the lower vertical position to the upper vertical position.

12. Wind turbine installation method of the wind turbine assembly system according to claim 1, the wind turbine tower comprising a tower (2), the lifting structure comprising:
- a mast (1), and
- a boom (4) configured to be joined to the mast (1),
the installation method **characterised in that** it comprises the following steps:
- locating the first guiding means (9.1) of the hoisting system in the mast (1) for its hoisting,
- pulling the hoisting cable (7) of the hoisting system and hoisting the mast (1) between at least the horizontal position and the vertical position.

13. Wind turbine installation method, according to claim 12, wherein it comprises the steps of:
- providing a winch (9),
- hoisting second guiding means to the tower (2),
- pulling the hoisting cable (7) of the hoisting system deployed from the winch (9) and further guided by the second guiding means (9.2) and hoisting the mast (1) between at least the horizontal position and the vertical position.

14. Wind turbine installation method, according to claim 12 or 13, wherein the mast (1) comprises at least a first section (3.1) and a second section (3.2) pivotably connected, the first section (3.1) being located between the second section (3.2) and the ground in a folded state, the first guiding means (9.1) located in the second section (3.2), the method comprising the step of pulling from the second section (3.2) so that the second section (3.2) moves from the horizontal position to the vertical position in a direction of rotation while the first section (3.1) moves from the horizontal position to the vertical in the opposite direction of rotation.

15. Wind turbine installation method, according to any preceding claim 12 to 14, wherein it further comprises the following steps:
o providing a flipping frame (5),
o connecting the mast (1) to the flipping frame (5) through pivot means, and
o pivoting the mast (1) with respect to the flipping frame (5) between the horizontal position and the vertical position.
